# EUROPEAN PATENT APPLICATION

(11) **EP 1 591 150 A1**
(43) Date of publication of application: **02.11.2005**
(21) Application number: 05103550.9
(22) Date of filing: 29.04.2005
(51) Int. Cl.: A63F 13/00

(54) **Presenting in-game tips on a video game system**

(30) Priority: 30.04.2004 US 836988
(71) Applicant: MICROSOFT CORPORATION, Redmond, Washington 98052-6399 (US)
(72) Inventor: Whitten, Jon Marcus Randall, 98052, Redmond (US)
(74) Representative: Zimmer, Franz-Josef

(57) **Abstract**

A system architecture within a multimedia console having a host application that provides information to a user related to a multimedia application with which user is currently interacting A system application residing in the memory and running concurrently with a multimedia application receives a request for help via an input device and retrieves context sensitive information to satisfy the request. The context sensitive information is provided from an external source to the multimedia application.

## Description

### COPYRIGHT NOTICE / PERMISSION

A portion of the disclosure of this patent document contains material, which is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice applies to the software and data as described below and in the drawings hereto: Copyright © 2004, Microsoft Corporation, All Rights Reserved.

### FIELD OF THE INVENTION

This invention generally relates to the field of multimedia devices. In particular, the present invention is directed to a system architecture that enables a host application running on the multimedia device to provide help in order for users to utilize multimedia applications more effectively.

### BACKGROUND OF THE INVENTION

The growing popularity of multimedia devices, such as video game consoles, and their applications has spawned countless websites, chat groups, bulletin boards, printed publications, etc., for the exchange of information on how users may better utilize the applications (e.g., games). However, because of the limited ability of conventional multimedia devices to provide system services, information regarding tips, shortcuts and other features cannot be presented while users are interacting with the multimedia application itself. Thus, if a user requires help with an application, the user must stop their multimedia experience and turn to an external source of information for such help. This providers for a poor overall user experience.

As multimedia devices grow in power, more complex applications will developed, which will create an even greater demand for information on how to better utilize these complex applications. Thus, there is a need for a system and method of providing context sensitive information, such a tips, etc., to users of a multimedia device while they interact with an application running on the multimedia device to further enhance the users' experience. The present invention provides such a solution.

### SUMMARY OF THE INVENTION

This present invention is directed to a system architecture having a host application that provides information related to an application with which user is currently interacting. In accordance with an aspect of the invention there is provided a multimedia console having a central processing unit, a graphics processing unit, a memory and an input device. A system application residing in the memory and running concurrently with a multimedia application receives a request for help via the input device and retrieves context sensitive information to satisfy the request. The context sensitive information is provided from an external source to the multimedia application.

According to a feature of the invention, the system application receives state information from the multimedia application regarding a current context of the multimedia application. The state information is defined by a schema that may also define a granularity of the context sensitive information. The granularity may define under which states context sensitive information is available.

According to another feature, the system application instructs the multimedia console to retrieve the context sensitive information from the external source. The context sensitive information may be displayed as a graphical overlay on top of the multimedia application.

According to yet another feature, the context sensitive information may be updated in accordance with user inputs regarding a particular state of the multimedia application.

According to another aspect of the invention, there is provided a method of providing help related to a present state of a multimedia application in a multimedia console having a central processing unit, a graphics processing unit, a memory, and an input device. The method includes receiving a request for help, receiving state information indicative of the present state of the multimedia application, retrieving context sensitive information in response to the request and the state information, and providing the context sensitive information to satisfy the request.

Additional features and advantages of the invention will be made apparent from the following detailed description of illustrative embodiments that proceeds with reference to the accompanying drawings.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:

Fig. 1 is a block diagram showing a multimedia console in which aspects of the present invention may be implemented;

Fig. 2 is an block diagram illustrating an application manager;

Fig. 3 is a flowchart of the processes performed by the present invention;

Fig. 4 is an exemplary overview of the connections between multimedia devices and sources of help information; and

Fig. 5 is an exemplary user interface illustrating the presentation of context sensitive help information related to a multimedia application executing on the multimedia console.

### DETAILED DESCRIPTION OF ILLUSTRATIVE EMBODIMENTS

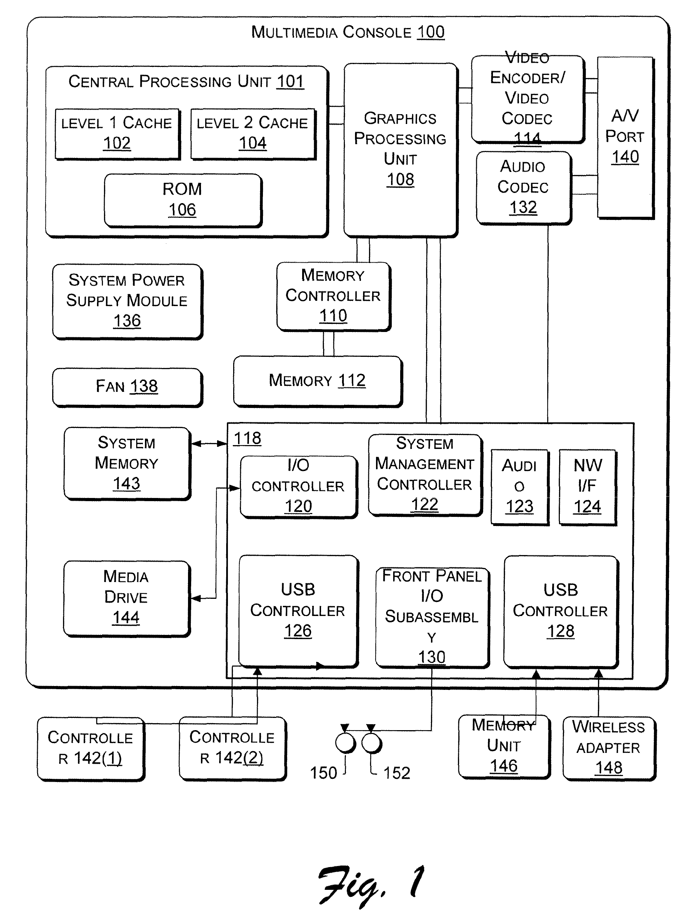

Fig. 1 illustrates the functional components of a multimedia console 100 in which certain aspects of the present invention may be implemented. The multimedia console 100 has a central processing unit (CPU) 101 having a level 1 cache 102, a level 2 cache 104, and a flash ROM (Read Only Memory) 106. The level 1 cache 102 and a level 2 cache 104 temporarily store data and hence reduce the number of memory access cycles, thereby improving processing speed and throughput. The CPU 101 may be provided having more than one core, and thus, additional level 1 and level 2 caches 102 and 104. The flash ROM 106 may store executable code that is loaded during an initial phase of a boot process when the multimedia console 100 is powered ON.

A graphics processing unit (GPU) 108 and a video encoder/video codec (coder/decoder) 114 form a video processing pipeline for high speed and high resolution graphics processing. Data is carried from the graphics processing unit 108 to the video encoder/video codec 114 via a bus. The video processing pipeline outputs data to an A/V (audio/video) port 140 for transmission to a television or other display. A memory controller 110 is connected to the GPU 108 to facilitates processor access to various types of memory 112, such as, but not limited to, a RAM (Random Access Memory).

The multimedia console 100 includes an I/O controller 120, a system management controller 122, an audio processing unit 123, a network interface controller 124, a first USB host controller 126, a second USB controller 128 and a front panel I/O subassembly 130 that are preferably implemented on a module 118. The USB controllers 126 and 128 serve as hosts for peripheral controllers 142(1)-142(2), a wireless adapter 148, and an external memory device 146 (e.g., flash memory, external CD/DVD ROM drive, removable media, etc.). The network interface 124 and/or wireless adapter 148 provide access to a network (e.g., the Internet, home network, etc.) and may be any of a wide variety of various wired or wireless interface components including an Ethernet card, a modem, a Bluetooth module, a cable modem, and the like.

System memory 143 is provided to store application data that is loaded during the boot process. A media drive 144 is provided and may comprise a DVD/CD drive, hard drive, or other removable media drive, etc. The media drive 144 may be internal or external to the multimedia console 100. Application data may be accessed via the media drive 144 for execution, playback, etc. by the multimedia console 100. The media drive 144 is connected to the I/O controller 120 via a bus, such as a Serial ATA bus or other high speed connection (e.g., IEEE 1394).

The system management controller 122 provides a variety of service functions related to assuring availability of the multimedia console 100. The audio processing unit 123 and an audio codec 136 form a corresponding audio processing pipeline with high fidelity and stereo processing. Audio data is carried between the audio processing unit 123 and the audio codec 126 via a communication link. The audio processing pipeline outputs data to the A/V port 140 for reproduction by an external audio player or device having audio capabilities.

The front panel I/O subassembly 130 supports the functionality of the power button 150 and the eject button 152, as well as any LEDs (light emitting diodes) or other indicators exposed on the outer surface of the multimedia console 100. A system power supply module 136 provides power to the components of the multimedia console 100. A fan 138 cools the circuitry within the multimedia console 100.

The CPU 101, GPU 108, memory controller 110, and various other components within the multimedia console 100 are interconnected via one or more buses, including serial and parallel buses, a memory bus, a peripheral bus, and a processor or local bus using any of a variety of bus architectures.

When the multimedia console 100 is powered ON, application data may be loaded from the system memory 143 into memory 112 and/or caches 102, 104 and executed on the CPU 101. The application may present a graphical user interface that provides a consistent user experience when navigating to different media types available on the multimedia console 100. In operation, applications and/or other media contained within the media drive 144 may be launched or played from the media drive 144 to provide additional functionalities to the multimedia console 100.

The multimedia console 100 may be operated as a standalone system by simply connecting the system to a television or other display. In this standalone mode, the multimedia console 100 allows one or more users to interact with the system, watch movies, or listen to music. However, with the integration of broadband connectivity made available through the network interface 124 or the wireless adapter 148, the multimedia console 100 may further be operated as a participant in a larger network community.

When the multimedia console 100 is powered ON, a set amount of hardware resources are reserved for system use by the multimedia console operating system. These resources may include a reservation of memory (e.g., 16MB), CPU and GPU cycles (e.g., 5%), networking bandwidth (e.g., 8 kbs), etc. Because these resources are reserved at system boot time, the reserved resources do not exist from the application's view.

In particular, the memory reservation preferably is large enough to contain the launch kernel, concurrent system applications and drivers. The CPU reservation is preferably maintained at a constant level.

With regard to the GPU reservation, lightweight messages generated by the system applications (e.g.,. popups) are displayed by using a GPU interrupt to schedule code to render popup into an overlay. The amount of memory required for an overlay depends on the overlay area size and the overlay preferably scales with screen resolution. Where a full user interface is used by the concurrent system application, it is preferable to use a resolution independent of game resolution. A scaler may be used to set this resolution such that the need to change frequency and cause a TV resynch is eliminated.

After the multimedia console 100 boots and system resources are reserved, concurrent system applications execute to provide system functionalities. The system functionalities are encapsulated in a set of system applications that execute within the reserved system resources described above. The operating system kernel identifies threads that are system application threads versus multimedia application threads. The system applications are preferably scheduled to run on the CPU 101 at predetermined times and intervals in order to provide a consistent system resource view to the application. The scheduling is to minimize cache disruption for the multimedia application running on the console.

When a concurrent system application requires audio, audio processing is scheduled asynchronously to the multimedia application due to time sensitivity. A multimedia console application manager (described below) controls the multimedia application audio level (e.g., mute, attenuate) when system applications are active.

Input devices (e.g., controllers 142(1) and 142(2)) are shared by multimedia applications and system applications. The input devices are not reserved resources, but are to be switched between system applications and the multimedia application such that each will have a focus of the device. The application manager preferably controls the switching of input stream, without knowledge the multimedia application's knowledge and a driver maintains state information regarding focus switches.

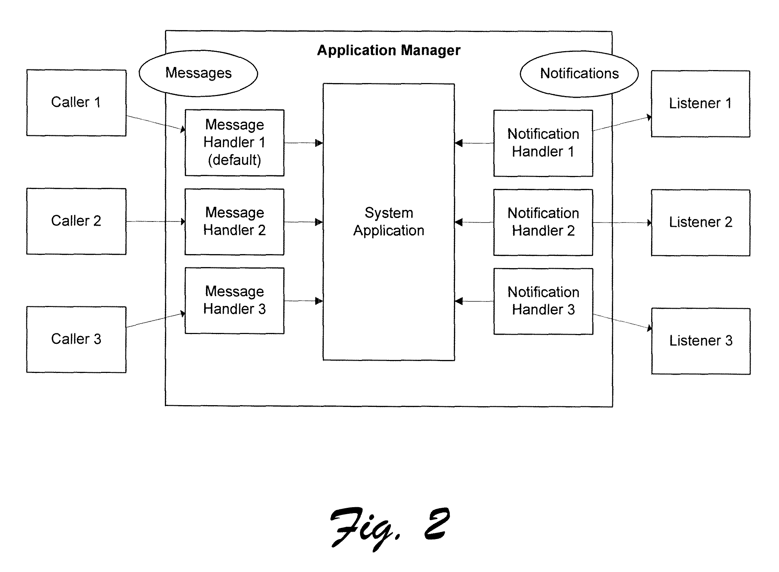

Referring to Fig. 2, there is illustrated the application manager and its relationship to the system applications and multimedia applications. The communication to system applications is preferably message based. APIs are exposed to the multimedia applications that wrap messages. Communication from the system applications is notification based. Multiple listeners and multiple callers are supported using small proxy objects.

As noted above, concurrent system applications provide system functionalities as the multimedia application executes, and require little, if any, support from the multimedia application. As will now be described in further detail, an exemplary system functionality provided by a concurrent application is the retrieval and display of tips, shortcuts and other context sensitive help information to enhance the user's experience with respect a particular application running on the multimedia console 100.

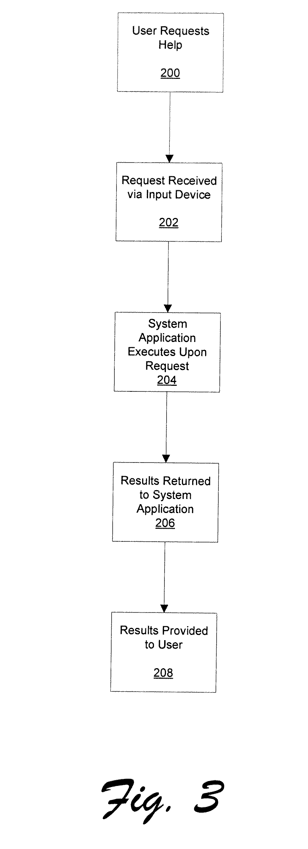

Referring to Fig. 3, there is illustrated an exemplary flowchart of the processes performed by the present invention. At step 200, a user is interacting with a multimedia application running on the console 100. It is likely that during interactive use of the multimedia application, the user may wish to obtain help regarding the use of the application. The user may request help by, e.g., pressing a button on the controller 142, entering a command, verbally indicating to a voice recognition system, etc.

Next, the console 100 receives the request for information at step 202, via an appropriate input. A concurrent system application running on the console 100 then interprets the request and executes upon it at step 204. It is preferable to provide the user with context sensitive information relative to a present state of the multimedia application. As such, state information related to the present state of the multimedia application is also retrieved by the concurrent system application at step 204. The state information may be retrieved through messaging and the application manager. The multimedia application uses a predefined schema to determine what information is passed to the concurrent system application. The schema may define, e.g., a granularity of information to be provide to an end user, whether help information is available for a current state, etc.

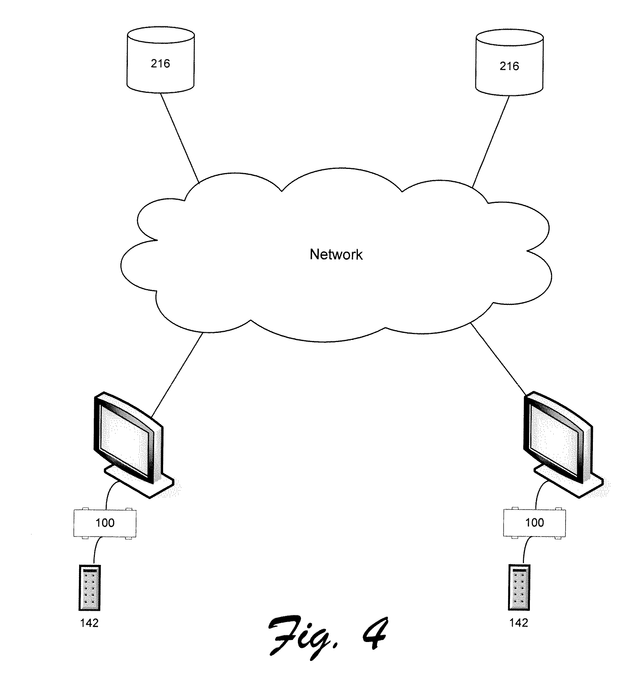

In accordance with the present invention, the context sensitive help information may be gathered and provided in many ways, as will be recognized by one of ordinary skill in the art. Referring to Fig. 4, the context sensitive help information may uploaded to one or more datastores 216 over a network (e.g., the Internet). The context sensitive help information may provide solutions to problems encountered at particular states (e.g., game levels, etc.) of a multimedia application. The context sensitive help information may include, but is not limited to, automatically uploaded user data (e.g., replays of the best players automatically gets saved as tips), user entered data (e.g., users creating tips themselves that are then ranked by other users). run time generated data (e.g., a chess engine returning preferred moves as a tip based on calculation at the time the tip is received), and static tips created by the game developer. This data may be made available for retrieval by the concurrent system applications running on consoles 100 through known protocols. In addition, users may be asked to subscribe to the datastores 216 to gain access to the help information.

Alternatively, help information may be provided to consoles via removable media and memory unit 146. Further, the context sensitive help information related to a particular state of a multimedia application may be updated such that more relevant help information may be provided as more users encounter problems and provide solutions. Still further, the context sensitive information may be ranked based on a number of times it has been requested, feedback from other users regarding if the help information solved a particular problem, etc.

Referring again to Fig. 3, the concurrent system application may query one or more of the above sources of information when executing the request at step 204. After the appropriate information is located, it is returned to the concurrent system application at step 206. The concurrent system application then provides the information to the user in an appropriate manner (e.g., visually, verbally, etc.) at step 208.

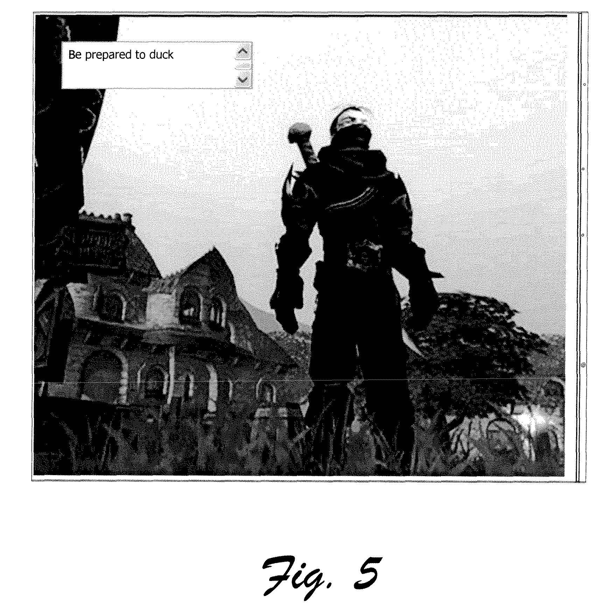

Referring to Fig. 5, there is an example of a concurrent system application that has returned a tip to a user during the execution of a multimedia application. As illustrated in Fig. 5, a graphical interface is provided to offer a tip to a user who has previously requested help with regard to the present state of the multimedia application. Alternatively, the tip or context sensitive help may be returned as a video clip, audio clip, or as an application asset (e.g., a best saved game to get past a particular area, or a replay, etc.).

While the present invention has been described in connection with the preferred embodiments of the various Figs., it is to be understood that other similar embodiments may be used or modifications and additions may be made to the described embodiment for performing the same function of the present invention without deviating therefrom.

## Claims

1. A multimedia console, comprising:
a central processing unit;
a graphics processing unit;
a memory; and
an input device;
wherein a system application residing in said memory and running concurrently with a multimedia application receives a request for help via said input device, and retrieves context sensitive information to satisfy said request, and
wherein said context sensitive information is provided from an external source to said multimedia application.

2. The multimedia console of claim 1, wherein said system application receives state information from said multimedia application regarding a current context of the multimedia application.

3. The multimedia console of claim 2, wherein said state information is defined by a schema, said schema further defining a granularity of said context sensitive information.

4. The multimedia console of claim 3, wherein said granularity defines under which states context sensitive information is available.

5. The multimedia console of claim 1, wherein said system application instructs said multimedia console to retrieve said context sensitive information from said external source.

6. The multimedia console of claim 1, wherein said context sensitive information is provided as an audio output.

7. The multimedia console of claim 1, wherein said context sensitive information is displayed as a graphical overlay on top of said multimedia application.

8. The multimedia console of claim 7, wherein said context sensitive information is provided as a video output within said graphical overlay.

9. The multimedia console of claim 1, wherein said context sensitive information is provided as an application asset.

10. The multimedia console of claim 1, wherein said context sensitive information is provided by at least one of automatic uploads based on a predetermined criteria, user input, application runtime inputs, and developer inputs.

11. In a multimedia console having a central processing unit, a graphics processing unit, a memory, and an input device, a method of providing help related to a present state of a multimedia application, comprising:
receiving a request for help;
receiving state information indicative of said present state of said multimedia application;
retrieving context sensitive information in response to said request and said state information; and
providing said context sensitive information to satisfy said request.

12. The method of claim 8, further comprising defining a schema that defines said state information and a granularity of said context sensitive information.

13. The method of claim 9, wherein said granularity defines under which states context sensitive information is available.

14. The method of claim 8, further comprising instructing said multimedia console to retrieve said context sensitive information from an external source to said multimedia application.

15. The method of claim 11, further comprising providing said context sensitive information as an audio output.

16. The method of claim 11, further comprising displaying said context sensitive information based on a relevance ranking.

17. The method of claim 11, further comprising displaying said context sensitive information as a graphical overlay on top of said multimedia application.

18. The method of claim 17, wherein said context sensitive information is provided as a video output within said graphical overlay.

19. The method of claim 11, further comprising providing said context sensitive information as an application asset.

20. The method of claim 11, wherein said context sensitive information is provided by at least one of automatic uploads based on a predetermined criteria, user input, application runtime inputs, and developer inputs.

21. A computer-readable medium having computer-executable instructions for instructing a multimedia device to perform the steps of:
receiving a request for help;
receiving state information indicative of said present state of said multimedia application;
retrieving context sensitive information in response to said request and said state information; and
providing said context sensitive information to satisfy said request.

22. The computer readable medium of claim 21, further comprising instructions for defining a schema that defines said state information and a granularity of said context sensitive information.

23. The computer readable medium of claim 22, wherein said granularity defines under which states context sensitive information is available.

24. The computer readable medium of claim 21, further comprising instructions for directing said multimedia console to retrieve said context sensitive information from a remote source.

25. The computer readable medium of claim 21, further comprising instructions for providing said context sensitive information as an audio output.

26. The computer readable medium of claim 21, further comprising instructions for displaying said context sensitive information based on a relevance ranking.

27. The computer readable medium of claim 21, further comprising instructions for overlaying said context sensitive information as a graphical overlay on top of said multimedia application.

28. The computer readable medium of claim 27, further comprising instructions for providing said context sensitive information as a video output within said graphical overlay.

29. The computer readable medium of claim 21, further comprising instructions for providing said context sensitive information as an application asset.

30. The computer readable medium of claim 21, wherein said context sensitive information is provided by at least one of automatic uploads based on a predetermined criteria, user input, application runtime inputs, and developer inputs.
